(19) Europäisches Patentamt / European Patent Office / Office européen des brevets

(11) EP 3 014 575 B1

(12) FASCICULE DE BREVET EUROPEEN

(45) Date de publication et mention de la délivrance du brevet:
29.07.2020 Bulletin 2020/31

(21) Numéro de dépôt: 14732183.0

(22) Date de dépôt: 23.06.2014

(51) Int Cl.:
G06T 11/60 (2006.01)     G06K 19/06 (2006.01)

(86) Numéro de dépôt international:
PCT/EP2014/063146

(87) Numéro de publication internationale:
WO 2014/206930 (31.12.2014 Gazette 2014/53)

(54) PROCÉDÉ ET SYSTÈME D'AFFICHAGE D'AU MOINS UN CODE MATRICIEL SUR UN ÉCRAN POUR LA TRANSMISSION DE DONNÉES À UN ÉQUIPEMENT ÉLECTRONIQUE MUNI DE MOYENS DE LECTURE DU OU DES CODES MATRICIELS

VERFAHREN UND SYSTEM ZUR ANZEIGE VON MINDESTENS EINEM MATRIXCODE AUF EINEM BILDSCHIRM ZUM SENDEN VON DATEN AN EINE ELEKTRONISCHE, MIT MITTELN ZUM LESEN VON MATRIXCODE(S) AUSGESTATTETEN AUSRÜSTUNG

METHOD AND SYSTEM FOR DISPLAYING AT LEAST ONE MATRIX CODE ON A SCREEN TO SEND DATA TO ELECTRONIC EQUIPMENT PROVIDED WITH MEANS FOR READING THE MATRIX CODE(S)

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: 24.06.2013 FR 1355998

(43) Date de publication de la demande:
04.05.2016 Bulletin 2016/18

(73) Titulaire: Schneider Toshiba Inverter Europe SAS
27120 Pacy sur Eure (FR)

(72) Inventeurs:
• MALRAIT, François
F-27120 Jouy Sur Eure (FR)

• GENEAU, Marc
F-27220 Fresney (FR)

(74) Mandataire: Lavoix
62, rue de Bonnel
69448 Lyon Cedex 03 (FR)

(56) Documents cités:
US-A1- 2008 122 847

• "ISO/IEC 18004:2006 Information technology -- Automatic identification and data capture techniques -- QR Code 2005 bar code symbology specification", INTERNATIONAL STANDARD ISO/IEC, XX, XX, vol. 18004, septembre 2006 (2006-09), pages 1-114, XP009136090,

**Description**

La présente invention concerne un procédé d'affichage d'au moins un code matriciel sur un écran d'un dispositif électronique d'affichage, pour la transmission de données à un équipement électronique muni de moyens de lecture du ou des codes matriciels. Le dispositif d'affichage comporte l'écran et des moyens d'affichage d'informations à l'écran.

Le procédé comprend la génération d'au moins un code matriciel en deux dimensions à partir des données à transmettre, et l'affichage du ou des codes matriciels à l'écran, les codes matriciels étant affichés de manière successive lorsque plusieurs codes matriciels sont générés.

L'invention concerne également un système d'affichage d'au moins un code matriciel sur un écran pour la transmission de données à un équipement électronique muni de moyens de lecture du ou des codes matriciels.

Il existe plusieurs types de codes matriciels en deux dimensions, également appelés code QR (de l'anglais *Quick Response*), et la quantité de données apte à être encodées sous forme d'un code QR dépend de la taille dudit code QR. Le code QR est un code en deux dimensions, et sa taille est exprimée sous forme d'un produit de deux nombres de pixels, chaque nombre correspondant à une dimension respective. Plus la taille du code matriciel est importante, plus la quantité de données encodées est élevée. Autrement dit, plus la taille du code matriciel est importante, plus grande sera la quantité de données transmises, via l'affichage dudit code matriciel, à l'équipement muni des moyens de lecture du code matriciel.

L'écran est agencé dans un plan comportant une direction horizontale et une direction verticale, et présente une résolution prédéterminée, c'est-à-dire un nombre maximal de pixels affichables suivant la direction horizontale multiplié par un nombre maximal de pixels affichables suivant la direction verticale. La taille du code matriciel est alors limitée par la résolution de l'écran du dispositif d'affichage, puisqu'elle doit être inférieure à cette résolution de l'écran pour que le code matriciel puisse être affiché à l'écran.

En outre, la résolution est généralement variable d'un dispositif d'affichage à l'autre, et lorsqu'un même code matriciel doit être visualisable sur différents dispositifs d'affichage présentant des valeurs de résolution diverses, le type de code matriciel choisi pour la transmission des données aura nécessairement une taille inférieure à la plus faible résolution parmi lesdits dispositifs d'affichage. Il sera alors généralement nécessaire d'afficher successivement un grand nombre de codes matriciels afin de transmettre l'ensemble des données à l'équipement muni des moyens de lecture des codes matriciels.

Par ailleurs, US 2008/0122847 A1 décrit le découpage d'une image principale en une pluralité d'images secondaires pour l'affichage de l'image principale sous forme de plusieurs images secondaires à l'écran d'un terminal.

Le but de l'invention est donc de proposer un procédé d'affichage d'au moins un code matriciel sur un écran permettant d'optimiser, en fonction de la résolution de l'écran, la quantité de données transmises à l'équipement via l'affichage du ou des codes matriciels.

A cet effet, l'invention a pour objet un procédé d'affichage selon la revendication 1 ou selon la revendication 12.

Suivant d'autres aspects avantageux de l'invention, le procédé d'affichage est selon l'une quelconque des revendications 2 à 9.

L'invention a également pour objet un système d'affichage selon la revendication 10 ou selon la revendication 13.

Suivant un autre aspect avantageux de l'invention, le système d'affichage est selon la revendication 11.

Ces caractéristiques et avantages de l'invention apparaîtront à la lecture de la description qui va suivre, donnée uniquement à titre d'exemple non limitatif, et faite en référence aux dessins annexés, sur lesquels :

- la figure 1 est une représentation schématique d'un système d'affichage selon invention, le système d'affichage comprenant plusieurs dispositifs électroniques d'affichage et un appareil électronique distant, relié à chaque dispositif d'affichage par une liaison de données respective, l'appareil électronique comportant une mémoire de stockage des données à transmettre,
- la figure 2 est un organigramme d'un procédé d'affichage selon l'invention, comportant une étape de génération d'un code matriciel à partir des données à transmettre, une étape de découpage d'une image principale correspondant au code matriciel en plusieurs images secondaires et une étape d'affichage du code matriciel sous la forme des images secondaires,
- la figure 3 est une vue d'une image principale d'un code matriciel,
- la figure 4 est une vue des images secondaires obtenues après le découpage de l'image principale de la figure 3 en deux images secondaires, et
- la figure 5 est une représentation schématique illustrant le calcul de la taille des images secondaires.

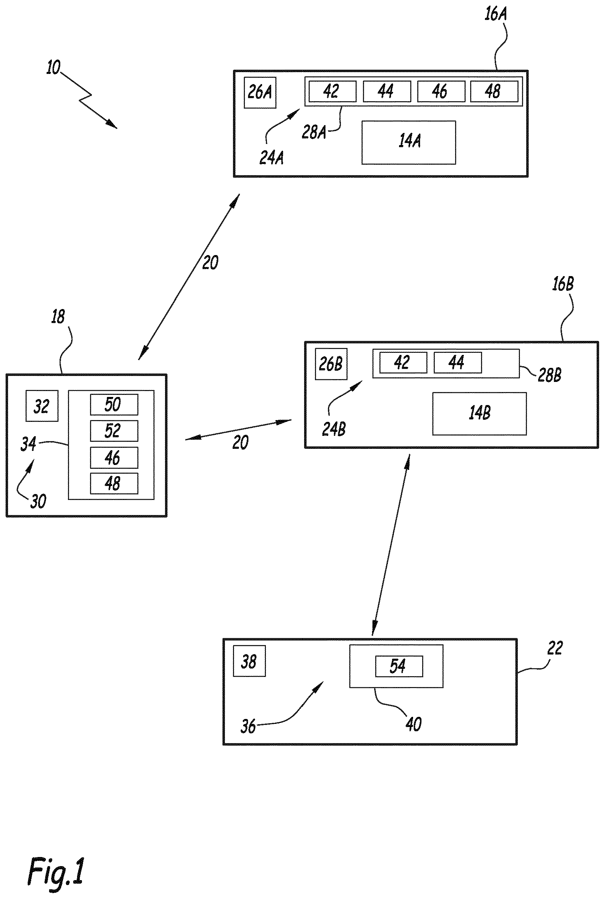

Sur la figure 1, un système 10 d'affichage d'au moins un code matriciel 12 sur un écran respectif 14A, 14B comprend plusieurs dispositifs électroniques d'affichage 16A, 16B, à savoir un premier dispositif d'affichage 16A et un deuxième dispositif d'affichage 16B, et un appareil électronique distant 18, relié à chaque dispositif d'affichage 16A, 16B par une liaison de données 20 respective.

La figure 1 représente également un équipement électronique 22 apte à lire le ou les codes matriciels 12 affichés sur l'écran 14A, 14B, chaque écran 14A, 14B étant agencé dans un plan comportant une direction horizontale X et une direction verticale Y.

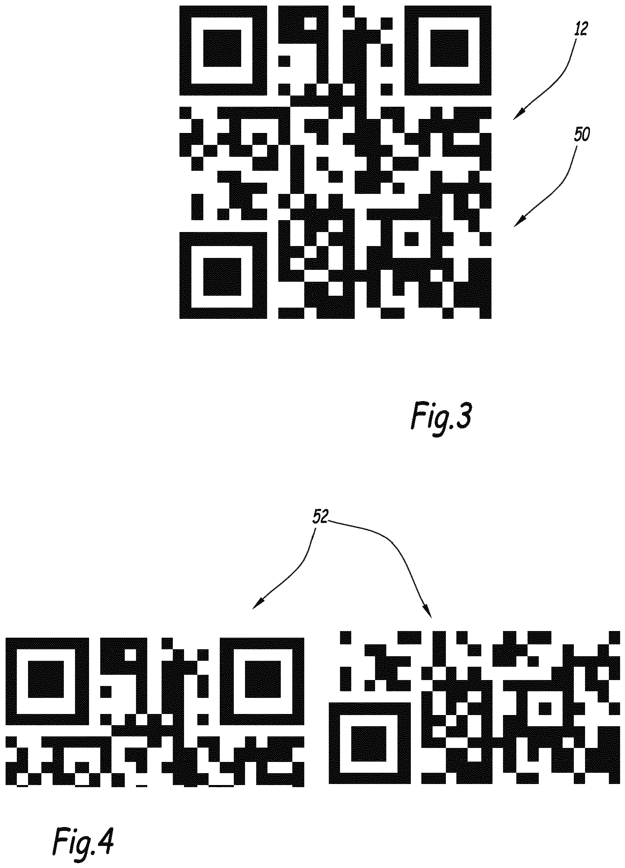

Le code matriciel 12, visible sur la figure 3, est un code matriciel en deux dimensions, également appelé code QR (de l'anglais *Quick Response*). La quantité de données apte à être encodées sous forme du code QR 12 dépend de la taille dudit code QR 12. La taille du code matriciel 12 est exprimée sous forme d'un produit de deux nombres de pixels, chaque nombre correspondant à une dimension respective. Par la suite, L1x représentera la dimension du code matriciel 12 selon la direction horizontale X, et L1y représentera la dimension du code matriciel 12 selon la direction verticale Y.

Plus la taille du code matriciel 12 est importante, plus la quantité de données encodées est élevée. Autrement dit, plus la taille du code matriciel 12 est importante, plus grande sera la quantité de données transmises, via l'affichage dudit code matriciel 12, à l'équipement électronique 22.

Le code matriciel 12 est de préférence conforme à la norme ISO/CEI 18004.

Chaque écran 14A, 14B présente une résolution prédéterminée, c'est-à-dire un nombre maximal L2x de pixels affichables suivant la direction horizontale X multiplié par un nombre maximal L2y de pixels affichables suivant la direction verticale Y. Autrement dit, L2x représente la dimension de la résolution de l'écran 14A, 14B selon la direction horizontale X, et L2y représente la dimension de la résolution de l'écran 14A, 14B selon la direction verticale Y.

Dans l'exemple de réalisation de la figure 1, le premier écran d'affichage 14A présente une première résolution, et le deuxième écran d'affichage 14B présente une deuxième résolution différente de la première résolution.

Le premier dispositif d'affichage 16A comprend le premier écran d'affichage 14A. Le premier dispositif d'affichage 16A comprend également une première unité de traitement d'informations 24A, formée par exemple d'un premier processeur 26A et d'une première mémoire 28A associée au premier processeur 26A.

Le deuxième dispositif d'affichage 16B comprend le deuxième écran d'affichage 14B. Le deuxième dispositif d'affichage 16B comprend une deuxième unité de traitement d'informations 24B, formée par exemple d'un deuxième processeur 26A et d'une deuxième mémoire 28B associée au deuxième processeur 26B.

L'appareil distant 18 comprend une troisième unité de traitement 30, formée par exemple d'un troisième processeur 32 et d'une troisième mémoire 34 associée au troisième processeur 32.

L'appareil distant 18 est, par exemple, un variateur de vitesse. Le variateur de vitesse est apte à piloter un moteur électrique, et est utilisé pour différentes applications, telles que le traitement de l'eau, des applications électriques, l'extraction et/ou le transport de pétrole ou de gaz, des applications en métallurgie ou dans le traitement de minerai, ou encore pour des applications concernant le chauffage, la ventilation et le conditionnement de l'air, également appelées applications HVAC (de l'anglais *Heating, Ventilation and Air Conditioning*).

Les liaisons de données 20 sont, par exemple, des liaisons radioélectriques, et les dispositifs d'affichage 16A, 16B, respectivement l'appareil distant 18, comportent chacun un émetteur-récepteur radioélectrique, non représenté.

L'équipement électronique 22 apte à lire les codes matriciels 12 comprend une quatrième unité de traitement d'informations 36, formée par exemple d'un quatrième processeur 38 et d'une quatrième mémoire 40 associée au quatrième processeur 38.

La première mémoire 28A est apte à stocker un logiciel 42 d'affichage d'informations à l'écran 14A et un logiciel 44 de réception, via la liaison de données 20, de données émises par l'appareil distant 18.

La première mémoire 28A est également apte à stocker un logiciel 46 de génération d'un ou de plusieurs codes matriciels en deux dimensions 12 à partir de données à transmettre à l'équipement électronique 22, lesdites données à transmettre étant par exemple reçues par le logiciel de réception 44 depuis l'appareil distant 18.

La première mémoire 28A est également apte à stocker un logiciel 48 de découpage d'une image principale 50 correspondant à un code matriciel généré 12 (figure 3) en au moins deux images secondaires 52 (figure 4), les dimensions de l'image principale 50 étant égales aux dimensions dudit code matriciel 12 et les dimensions de chaque image secondaire 52 étant inférieures ou égales à la résolution de l'écran 14A du premier dispositif d'affichage.

En variante, les moyens d'affichage 42, les moyens de réception 44, les moyens de génération 46 et les moyens de découpage 48 sont réalisés sous forme de composants électroniques programmables ou encore sous forme de circuits intégrés dédiés.

La deuxième mémoire 28B est apte à stocker le logiciel d'affichage 42, le logiciel d'affichage 42 étant apte à afficher des informations à l'écran 14B, et le logiciel de réception 44. En revanche, la deuxième mémoire 28 ne comporte ni le logiciel de génération 46, ni le logiciel de découpage 48.

Autrement dit, dans l'exemple de réalisation de la figure 1, le deuxième dispositif d'affichage 16B présente des capacités inférieures à celle du premier dispositif d'affichage 16A puisqu'il comporte seulement les moyens d'affichage 42 et les moyens de réception 44, mais ne comporte pas les moyens de génération 46 et les moyens de découpage 48, la génération du ou des codes matriciels 12 et le découpage de l'image principale 50 en images secondaires 52 étant alors effectué par l'appareil distant 18, comme cela sera décrit par la suite.

La troisième mémoire 34, c'est-à-dire la mémoire de l'appareil distant 18, est apte à stocker les données à transmettre à l'équipement électronique 22. La troisième mémoire 34 est apte à stocker un logiciel 50 d'émission, via la liaison de données 20, de données à destination d'un dispositif d'affichage 16A, 16B correspondant.

En complément, la troisième mémoire 34 est apte à stocker un logiciel 52 de détermination des capacités du ou des dispositifs d'affichage 16A, 16B reliés à l'appareil distant, le logiciel de détermination 52 étant notamment apte à détecter le cas où les capacités d'un dispositif d'affichage 16B correspondant sont insuffisantes pour générer un ou des codes matriciels 12 à partir de données reçues et pour découper l'image principale 50 correspondant à chaque code matriciel généré 12 en images secondaires 52. La troisième mémoire 34 est alors également apte à stocker le logiciel de génération 46 et le logiciel de découpage 48.

La quatrième mémoire 40, c'est-à-dire la mémoire de l'équipement électronique 22 apte à lire les images secondaires 52 affichées à l'écran 14A, 14B et correspondant à le ou aux codes matriciels 12 générés, est apte à stocker un logiciel 54 de lecture desdites images secondaires 52.

Le logiciel de génération 46 est apte à générer un ou plusieurs codes matriciels 12 à partir de données stockées en mémoire, les codes matriciels 12 générés étant de préférence conformes à la norme ISO/CEI 18004. Autrement dit, le logiciel de génération 46 est propre à encoder lesdites données en un ou plusieurs codes QR correspondants.

En complément, le logiciel de génération 46 est apte à sélectionner le type de code matriciel 12 le plus adapté, notamment en fonction de la quantité de données à encoder sous forme de codes matriciels 12. Le type de code matriciel 12, c'est-à-dire la version de symbole au sens de la norme ISO/CEI 18004, est en complément encore déterminé en fonction du niveau de correction souhaitée. Plus le niveau de correction est élevé, moins le code matriciel 12 contiendra de données pour une même version de symbole, c'est-à-dire pour un même type de code matriciel. Lorsque le code matriciel 12 est destiné à être affiché sur un écran, le niveau de correction est généralement inférieur à celui utilisé dans le cas où le code matriciel est imprimé sur une étiquette.

Le logiciel de découpage 48 est apte à déterminer le nombre N d'images secondaires 52 nécessaires pour chaque code matriciel 12, le nombre N d'images secondaires 52 par code matriciel 12 étant fonction de la résolution de l'écran 14A, 14B du dispositif d'affichage correspondant et des dimensions dudit code matriciel 12. Le logiciel de découpage 48 est ensuite apte à découper l'image principale 50 correspondant à un code matriciel 12 donné en la pluralité d'images secondaires 52, ledit code matriciel étant destinée à être affiché sous la forme desdites images secondaires 52 à l'écran 14A, 14B, et les images secondaires 52 étant affichées de manière successive à l'écran 14A, 14B.

Le logiciel de lecture 54 est apte à lire les images secondaires 52 affichées à l'écran 14A, 14B, c'est-à-dire à décoder les informations contenues dans ces images secondaires 52 et à stocker les informations décodées dans la quatrième mémoire 40. En complément, le logiciel de lecture 54 est apte à lire également les codes matriciels 12.

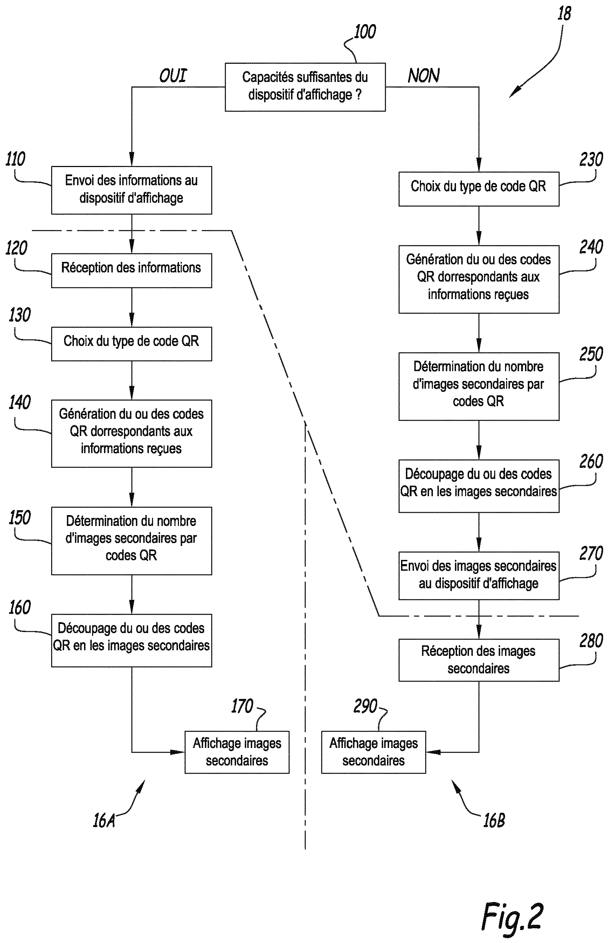

Le fonctionnement du système d'affichage 10 selon l'invention va être décrit plus en détail à l'aide de la figure 2 représentant un organigramme du procédé d'affichage selon l'invention.

Lors de l'étape initiale 100, l'appareil distant 18 détermine, à l'aide de son logiciel de détermination 52, si les capacités du dispositif d'affichage 16A, 16B, qui est destinataire des prochaines données à transmettre à l'équipement 22 (par affichage d'images secondaires 52), sont suffisantes ou non pour générer le ou les codes matriciels 12 correspondant et pour découper la ou les images principales 50 en images secondaires 52.

La résolution de l'écran 14A, 14B du dispositif d'affichage est propre à chaque dispositif d'affichage 16A, 16B, et est fournie par chaque dispositif d'affichage 16A, 16B à l'appareil distant 18 lors d'échanges préliminaires de données entre l'appareil distant 18 et chaque dispositif d'affichage 16A, 16B.

En variante, un fichier de paramétrage est stocké dans la mémoire 34 de l'appareil distant 18 préalablement à l'étape initiale 100, le fichier de paramétrage contenant un identifiant unique pour chaque dispositif d'affichage 16A, 16B, et pour chaque identifiant, la valeur de la résolution de l'écran du dispositif d'affichage 16A, 16B correspondant.

Si les capacités du dispositif d'affichage 16A sont suffisantes, comme c'est le cas du premier dispositif d'affichage 16A dans l'exemple de réalisation de la figure 1, alors l'appareil distant 18 envoie au dispositif d'affichage 16A correspondant, lors de l'étape 110 et à l'aide de son logiciel d'émission 50, les données à transmettre à l'équipement 22 sous la forme d'images secondaires 52 correspondant à un ou plusieurs codes matriciels 12.

Le dispositif d'affichage, par exemple le premier dispositif d'affichage 16A, reçoit lors de l'étape 120 et à l'aide de son logiciel de réception 44, lesdites données à transmettre à l'équipement 22.

Le premier dispositif d'affichage 16A sélectionne ensuite, lors de l'étape 130 et à l'aide du logiciel de génération 46, le type de code matriciel 12 le plus adapté, notamment en fonction de la quantité desdites données à transmettre à l'équipement 22. A titre d'exemple, la quantité de données à transmettre est de 3 kilooctets (Ko), et le premier dispositif d'affichage 16A choisira alors par exemple un code QR en version 39 comportant $157 \times 157$ modules, chacun de taille $3 \times 3$ pixels, soit un code QR de $471 \times 471$ pixels. Le code QR 12 est généré lors de l'étape suivante 140 par le premier dispositif d'affichage 16A et toujours à l'aide du logiciel de génération 46. La génération du code QR 12 effectuée lors de l'étape 140 est connue en soi.

Le premier dispositif d'affichage 16A détermine ensuite, lors de l'étape 150 et à l'aide du logiciel de découpage 48, le nombre d'images secondaires 52 nécessaires pour chaque code QR 12.

Le nombre N d'images secondaires 52 pour chaque code QR 12 est fonction de la résolution de l'écran 14A du dispositif d'affichage et des dimensions dudit code QR 12. Le nombre N d'images secondaires 52 pour chaque code QR 12 vérifie l'équation suivante :

$$N = Nx \times Ny \tag{1}$$

où Nx représente le nombre d'images secondaires 52 selon la direction horizontale X et Ny représente le nombre d'images secondaires 52 selon la direction verticale Y.

Le nombre Nx d'images secondaires 52 selon la direction horizontale X vérifie, par exemple, l'équation suivante :

$$Nx = \begin{cases} E\left(\dfrac{L1x}{L2x}\right), & si \ \dfrac{L1x}{L2x} - E\left(\dfrac{L1x}{L2x}\right) = 0 \\ E\left(\dfrac{L1x}{L2x}\right) + 1, & si \ \dfrac{L1x}{L2x} - E\left(\dfrac{L1x}{L2x}\right) > 0 \end{cases} \tag{2}$$

où L1x représente la dimension du code QR 12 selon la direction horizontale X et L2x représente la dimension de la résolution de l'écran 14A selon la direction horizontale X, et E désigne la partie entière au sens mathématique.

Le nombre Ny d'images secondaires selon la direction verticale Y vérifie, par exemple, l'équation suivante :

$$Ny = \begin{cases} E\left(\dfrac{L1y}{L2y}\right), & si \ \dfrac{L1y}{L2y} - E\left(\dfrac{L1y}{L2y}\right) = 0 \\ E\left(\dfrac{L1y}{L2y}\right) + 1, & si \ \dfrac{L1y}{L2y} - E\left(\dfrac{L1y}{L2y}\right) > 0 \end{cases} \tag{3}$$

où L1y représente la dimension du code QR 12 selon la direction verticale Y et L2y représente la dimension de la résolution de l'écran 14A selon la direction verticale Y, et E désigne la partie entière.

A titre d'exemple, la résolution de l'écran 14A du premier dispositif est de 240 pixels selon la direction horizontale X et de 160 pixels selon la direction verticale Y. Autrement dit, L2x est égal à 240 et L2y est égal à 160. Avec le code QR de 471 × 471 pixels cité précédemment, c'est-à-dire ayant L1x et L1y tous deux égaux à 471, alors Nx est égal à 2 d'après l'équation (2) et Ny est égal à 3 d'après l'équation (3). Dans cet exemple, le nombre N d'images secondaires est donc égal à 6.

L'image principale 50 correspondant au code QR 12 est ensuite découpée, lors de l'étape 160 et à l'aide du logiciel de découpage 48, en la pluralité d'images secondaires 52 en fonction des nombres Nx et Ny d'images secondaires 52 selon la direction horizontale X, et respectivement selon la direction verticale Y.

A titre d'exemple, la taille des images secondaires 52 est calculée de la manière suivante.

Les paramètres lx, ly et rx, ry sont définis comme vérifiant les égalités suivantes :

$$lx = E\left(\frac{L1x}{Nx}\right) \tag{4}$$

$$ly = E\left(\frac{L1y}{Ny}\right) \tag{5}$$

$$rx = L1x - Nx \times lx \tag{6}$$

$$ry = L1y - Ny \times ly \qquad (7)$$

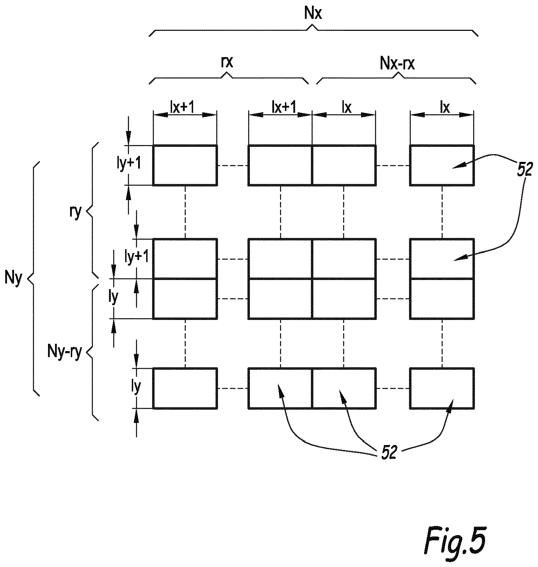

Sur une ligne horizontale d'images secondaires, Nx-rx images secondaires 52 seront alors choisies avec une dimension selon la direction horizontale X égale à lx, et rx autres images secondaires 52 seront choisies avec une dimension selon la direction horizontale X égale à lx+1, comme représenté sur la figure 5.

Sur une colonne verticale d'images secondaires, Ny-ry images secondaires 52 seront alors choisies avec une dimension selon la direction verticale Y égale à ly, et ry autres images secondaires 52 seront choisies avec une dimension selon la direction verticale Y égale à ly+1, comme représenté également sur la figure 5.

En complément, non représenté, lors de l'étape 160 et suite au découpage de l'image principale 50 en plusieurs morceaux, les morceaux sont entourés chacun par un cadre pour générer les images secondaires 52. Autrement dit, chaque image secondaire 52 comporte alors un morceau de l'image principale 50, entouré dudit cadre. Le cadre est, par exemple, en forme d'une ligne noire, ou encore en forme d'un ensemble de lignes contenant une information encodée, l'information encodée permettant alors de faciliter le décodage ultérieur des données transmises via lesdites images secondaires 52.

Lorsque chaque image secondaire 52 comporte le cadre entourant le morceau de l'image principale 50, on note ep l'épaisseur du cadre, et le nombre Nx d'images secondaires 52 selon la direction horizontale X vérifie alors, par exemple, l'équation suivante :

$$Nx = \begin{cases} E\left(\dfrac{L1x}{L2x - 2 \times ep}\right), & si \ \dfrac{L1x}{L2x - 2 \times ep} - E\left(\dfrac{L1x}{L2x - 2 \times ep}\right) = 0 \\ E\left(\dfrac{L1x}{L2x - 2 \times ep}\right) + 1, & si \ \dfrac{L1x}{L2x - 2 \times ep} - E\left(\dfrac{L1x}{L2x - 2 \times ep}\right) > 0 \end{cases} \qquad (8)$$

où ep représente en outre l'épaisseur du cadre par rapport aux grandeurs définies précédemment pour l'équation (2).

Le nombre Ny d'images secondaires selon la direction verticale Y vérifie, par exemple, l'équation suivante :

$$Ny = \begin{cases} E\left(\dfrac{L1y}{L2y - 2 \times ep}\right), & si \ \dfrac{L1y}{L2y - 2 \times ep} - E\left(\dfrac{L1y}{L2y - 2 \times ep}\right) = 0 \\ E\left(\dfrac{L1y}{L2y - 2 \times ep}\right) + 1, & si \ \dfrac{L1y}{L2y - 2 \times ep} - E\left(\dfrac{L1y}{L2y - 2 \times ep}\right) > 0 \end{cases} \qquad (9)$$

où ep représente en outre l'épaisseur du cadre par rapport aux grandeurs définies précédemment pour l'équation (3).

Le nombre N d'images secondaires 52 pour chaque code QR 12 vérifie également l'équation (1).

Les paramètres lx, ly et rx, ry sont définis comme vérifiant les égalités suivantes :

$$lx = E\left(\dfrac{L1x}{Nx}\right) \qquad (10)$$

$$ly = E\left(\dfrac{L1y}{Ny}\right) \qquad (11)$$

$$rx = L1x - Nx \times lx \qquad (12)$$

$$ry = L1y - Ny \times ly \qquad (13)$$

Selon ce complément, la taille des images secondaires 52 est calculée comme suit. Nx-rx images secondaires 52 seront alors choisies avec une dimension selon la direction horizontale X égale à lx+(2*ep), et rx autres images secondaires 52 seront choisies avec une dimension selon la direction horizontale X égale à lx+(2*ep)+1. Ny-ry images secondaires 52 seront alors choisies avec une dimension selon la direction verticale Y égale à ly+(2*ep), et ry autres images secondaires 52 seront choisies avec une dimension selon la direction verticale Y égale à ly+(2*ep)+1.

Enfin, lors de l'étape 170, les images secondaires 52 ainsi obtenues sont affichées de manière successive à l'écran 14A du premier dispositif d'affichage à l'aide du logiciel d'affichage 42, ces images secondaires 52 étant destinées à être lues par l'équipement électronique 22 à l'aide de ses moyens de lecture 54.

Si, lors de l'étape initiale 100, les capacités du dispositif d'affichage 16A ne sont pas suffisantes, comme c'est le cas du deuxième dispositif d'affichage 16B dans l'exemple de réalisation de la figure 1, alors l'appareil distant 18 effectue lui-même successivement l'étape 230 de sélection du type de code matriciel 12, l'étape 240 de génération du ou des codes matriciels 12, l'étape 250 de détermination du nombre N d'images secondaires 52 et l'étape 260 de découpage de l'image principale 50 correspondant à chaque code matriciel 12 en la pluralité d'images secondaires 52.

Les étapes de sélection 230 et de génération 240, effectuées à l'aide du logiciel de génération 46, sont identiques aux étapes 130 et 140 décrites précédemment, et ne sont pas décrites à nouveau. De manière analogue, les étapes de détermination 250 et de découpage 260, effectués à l'aide du logiciel de découpage 48, sont identiques aux étapes 150 et 160 décrites précédemment, et ne sont pas décrites à nouveau.

En supposant à titre d'exemple que la résolution de l'écran 14B du deuxième dispositif est de 150 pixels selon la direction horizontale X et de 100 pixels selon la direction verticale Y, on obtient avec le code QR de $471 \times 471$ pixels, un nombre Nx égal à 4 d'après l'équation (2) et un nombre Ny égal à 5 d'après l'équation (3). Dans cet exemple, le nombre N d'images secondaires 52 est donc égal à 20 pour l'écran 14B du deuxième dispositif.

A l'issue de l'étape de découpage 260, l'appareil distant 18 envoie les images secondaires 52 à destination du dispositif d'affichage correspondant, par exemple au deuxième dispositif d'affichage 16B, et à l'aide de son logiciel d'émission 50.

Le deuxième dispositif d'affichage 16B reçoit alors, lors de l'étape 280 et à l'aide de son logiciel de réception 44, les images secondaires 52 transmises par l'appareil distant 18, et les affiche lors de l'étape 290 sur son écran 14B à l'aide de son logiciel d'affichage 42.

Le système d'affichage 10 et le procédé d'affichage selon l'invention permettent donc d'adapter l'affichage des codes matriciels 12 à la résolution des écrans 14A, 14B des différents dispositifs d'affichage 16A, 16B, cette résolution étant susceptible de varier d'un dispositif d'affichage 16A à l'autre 16B. En effet, les images principales 50 correspondant aux codes matriciels 12 sont, selon l'invention, découpées en images secondaires 52 affichables sur les écrans 14A, 14B, les dimensions de chaque image secondaire 52 étant inférieures ou égales à la résolution de l'écran 14A, 14B du dispositif d'affichage correspondant. Le nombre N d'images secondaires 52 varie ainsi en fonction de la résolution de l'écran 14A, 14B, et plus la résolution de l'écran 14A, 14B sera faible, plus le nombre N d'images secondaires 52 sera élevé.

Le système d'affichage 10 et le procédé d'affichage selon l'invention permettent également d'accélérer la transmission des données à destination de l'équipement 22 en comparaison avec le procédé d'affichage de l'état de la technique où l'image principale 50 correspondant au code QR 12 est affichée directement à l'écran 14A, 14B, sans être préalablement découpée en images secondaires 52.

En effet, à titre d'exemple, avec la résolution de l'écran 14A du premier dispositif de 240 pixels selon la direction horizontale X et de 160 pixels selon la direction verticale Y, le type de code QR 12 affichable directement sur cet écran serait un code QR en version 5 comportant $37 \times 37$ modules, chacun de taille $4 \times 4$ pixels, soit un code QR de $148 \times 148$ pixels. Un tel code QR permet d'encoder 154 octets, et avec le procédé d'affichage de l'état de la technique, il faudrait donc afficher successivement 20 codes QR de ce type sur l'écran 14A du premier dispositif pour transmettre 3 Ko de données. Avec l'écran 14A du premier dispositif, les 3 Ko de données sont transmises via l'affichage de seulement 6 images secondaires 52 suivant le procédé d'affichage selon l'invention. Autrement dit, dans cet exemple, la transmission des données à l'équipement 22 est environ 3,3 fois plus rapide avec le procédé d'affichage selon l'invention qu'avec le procédé d'affichage de l'état de la technique.

On conçoit ainsi que le système d'affichage 10 et le procédé d'affichage selon l'invention permettent d'optimiser, en fonction de la résolution de l'écran 14A, 14B, la quantité de données transmises à l'équipement 22 via l'affichage du code matriciel 12 sous forme d'images secondaires 52, ces images secondaires 52 résultant du découpage de l'image principale 50 correspondant au code matriciel 12.

**Revendications**

1. Procédé d'affichage d'au moins un code matriciel (12) sur un écran (14A, 14B) d'un dispositif électronique d'affichage (16A, 16B), pour la transmission de données à un équipement électronique (22) muni de moyens (54) de lecture du ou des codes matriciels (12), le dispositif d'affichage (16A, 16B) comportant l'écran (14A, 14B) et des moyens (42) d'affichage d'informations à l'écran,
le procédé comprenant les étapes suivantes :

- la génération (140 ; 240) d'au moins un code matriciel en deux dimensions (12) à partir des données à transmettre, et
- l'affichage (170 ; 290) du ou des codes matriciels à l'écran (14A, 14B), les codes matriciels (12) étant affichés de manière successive lorsque plusieurs codes matriciels (12) sont générés,

le procédé étant **caractérisé en ce qu'**il comprend en outre l'étape suivante :

- le découpage (160 ; 260) d'une image principale (50) correspondant à un code matriciel généré (12) en au moins deux images secondaires (52), les dimensions de l'image principale (50) étant égales aux dimensions dudit code matriciel (12) et les dimensions de chaque image secondaire (52) étant inférieures ou égales à la résolution de l'écran (14A, 14B) du dispositif d'affichage,

le ou les codes matriciels (12) correspondants étant affichés sous la forme des images secondaires (52) lors de l'étape d'affichage (170 ; 290), et les images secondaires (52) étant affichées de manière successive à l'écran (14A, 14B),
la résolution de l'écran (14A, 14B) et le code matriciel (12) présentant chacun une dimension selon une direction horizontale (X), et le nombre Nx d'images secondaires (52) selon la direction horizontale (X) vérifiant l'équation suivante :

$$Nx = \begin{cases} E\left(\dfrac{L1x}{L2x}\right), & si\ \dfrac{L1x}{L2x} - E\left(\dfrac{L1x}{L2x}\right) = 0 \\[2ex] E\left(\dfrac{L1x}{L2x}\right) + 1, & si\ \dfrac{L1x}{L2x} - E\left(\dfrac{L1x}{L2x}\right) > 0 \end{cases}$$

où L1x représente la dimension du code matriciel (12) selon la direction horizontale (X) et L2x représente la dimension de la résolution de l'écran (14A, 14B) selon la direction horizontale (X), et
E désigne la partie entière,

la résolution de l'écran (14A, 14B) et le code matriciel (12) présentant chacun une dimension selon une direction verticale (Y), et le nombre Ny d'images secondaires (52) selon la direction verticale (Y) vérifie l'équation suivante :

$$Ny = \begin{cases} E\left(\dfrac{L1y}{L2y}\right), & si\ \dfrac{L1y}{L2y} - E\left(\dfrac{L1y}{L2y}\right) = 0 \\[2ex] E\left(\dfrac{L1y}{L2y}\right) + 1, & si\ \dfrac{L1y}{L2y} - E\left(\dfrac{L1y}{L2y}\right) > 0 \end{cases}$$

où L1y représente la dimension du code matriciel (12) selon la direction verticale (Y) et L2y représente la dimension de la résolution de l'écran (14A, 14B) selon la direction verticale (Y), et
E désigne la partie entière,
le nombre N d'images secondaires (52) pour chaque code matriciel (12) vérifiant l'équation suivante :

$$N = Nx \times Ny.$$

2. Procédé selon la revendication 1, dans lequel le nombre (N) d'images secondaires (52) pour chaque code matriciel (12) est fonction de la résolution (L2x, L2y) de l'écran (14A, 14B) du dispositif d'affichage et des dimensions (L1x, L1y) dudit code matriciel (12).

3. Procédé selon la revendication 1 ou 2, dans lequel le ou chaque code matriciel (12) est conforme à la norme ISO/CEI 18004.

4. Procédé selon l'une quelconque des revendications précédentes, dans lequel les données à transmettre sont reçues d'un appareil électronique distant (18), distinct du dispositif d'affichage (16A, 16B) et relié au dispositif d'affichage (16A, 16B) par une liaison de données (20).

5. Procédé selon la revendication 4, dans lequel l'appareil électronique distant (18) comporte des moyens (46) de génération d'au moins un code matriciel en deux dimensions (12) à partir des données à transmettre et des moyens (48) de découpage d'une image principale (50) correspondant à un code matriciel généré (12) en au moins deux images secondaires (52), et dans lequel les étapes de génération (240) et de découpage (260) sont respectivement effectuées par lesdits moyens de génération (46) et par lesdits moyens de découpage (48).

6. Système (10) d'affichage d'au moins un code matriciel (12) sur un écran (14A, 14B) pour la transmission de données à un équipement électronique (22) muni de moyens (54) de lecture du ou des codes matriciels (12), le système (10) comprenant :

   - au moins un dispositif électronique d'affichage (16A, 16B) comportant l'écran (14A, 14B) et des moyens (42) d'affichage d'informations à l'écran (14A, 14B),
   - des moyens (46) de génération d'au moins un code matriciel en deux dimensions (12) à partir des données à transmettre, et

les moyens d'affichage (42) étant propres à afficher le ou les codes matriciels (12) à l'écran (14A, 14B), les codes matriciels (12) étant affichés de manière successive lorsque plusieurs codes matriciels (12) sont générés,
**caractérisé en ce qu'**il comprend en outre des moyens (48) de découpage d'une image principale (50) correspondant à un code matriciel généré (12) en au moins deux images secondaires (52), les dimensions de l'image principale (50) étant égales aux dimensions dudit code matriciel (12) et les dimensions de chaque image secondaire (52) étant inférieures ou égales à la résolution de l'écran (14A, 14B) du dispositif d'affichage correspondant,
le ou les codes matriciels correspondants (12) étant affichés sous la forme des images secondaires (52) par les moyens d'affichage (42), et les images secondaires (52) étant affichées de manière successive à l'écran (14A, 14B) correspondant,
la résolution de l'écran (14A, 14B) et le code matriciel (12) présentant chacun une dimension selon une direction horizontale (X), et le nombre Nx d'images secondaires (52) selon la direction horizontale (X) vérifiant l'équation suivante :

$$Nx = \begin{cases} E\left(\dfrac{L1x}{L2x}\right), & si\ \dfrac{L1x}{L2x} - E\left(\dfrac{L1x}{L2x}\right) = 0 \\[3ex] E\left(\dfrac{L1x}{L2x}\right) + 1, & si\ \dfrac{L1x}{L2x} - E\left(\dfrac{L1x}{L2x}\right) > 0 \end{cases}$$

où L1x représente la dimension du code matriciel (12) selon la direction horizontale (X) et L2x représente la dimension de la résolution de l'écran (14A, 14B) selon la direction horizontale (X), et
E désigne la partie entière,

la résolution de l'écran (14A, 14B) et le code matriciel (12) présentant chacun une dimension selon une direction verticale (Y), et le nombre Ny d'images secondaires (52) selon la direction verticale (Y) vérifie l'équation suivante :

$$Ny = \begin{cases} E\left(\dfrac{L1y}{L2y}\right), & si\ \dfrac{L1y}{L2y} - E\left(\dfrac{L1y}{L2y}\right) = 0 \\[3ex] E\left(\dfrac{L1y}{L2y}\right) + 1, & si\ \dfrac{L1y}{L2y} - E\left(\dfrac{L1y}{L2y}\right) > 0 \end{cases}$$

où L1y représente la dimension du code matriciel (12) selon la direction verticale (Y) et L2y représente la dimension de la résolution de l'écran (14A, 14B) selon la direction verticale (Y), et

E désigne la partie entière,

le nombre N d'images secondaires (52) pour chaque code matriciel (12) vérifiant l'équation suivante :

$$N = Nx \times Ny.$$

**7.** Système (10) selon la revendication 6, dans lequel le système (10) comprend en outre un appareil électronique distant (18), distinct du dispositif d'affichage (16A, 16B) et relié au ou à chaque dispositif d'affichage (16A, 16B) par une liaison de données (20), l'appareil électronique (18) comportant une mémoire (34) de stockage des données à transmettre, les données à transmettre étant reçues par les moyens de génération (46) depuis la mémoire de stockage (34).

**8.** Procédé d'affichage d'au moins un code matriciel (12) sur un écran (14A, 14B) d'un dispositif électronique d'affichage (16A, 16B), pour la transmission de données à un équipement électronique (22) muni de moyens (54) de lecture du ou des codes matriciels (12), le dispositif d'affichage (16A, 16B) comportant l'écran (14A, 14B) et des moyens (42) d'affichage d'informations à l'écran,

le procédé comprenant les étapes suivantes :

- la génération (140 ; 240) d'au moins un code matriciel en deux dimensions (12) à partir des données à transmettre, et
- l'affichage (170 ; 290) du ou des codes matriciels à l'écran (14A, 14B), les codes matriciels (12) étant affichés de manière successive lorsque plusieurs codes matriciels (12) sont générés,

le procédé étant **caractérisé en ce qu'**il comprend en outre l'étape suivante :

- le découpage (160 ; 260) d'une image principale (50) correspondant à un code matriciel généré (12) en au moins deux images secondaires (52), les dimensions de l'image principale (50) étant égales aux dimensions dudit code matriciel (12) et les dimensions de chaque image secondaire (52) étant inférieures ou égales à la résolution de l'écran (14A, 14B) du dispositif d'affichage, l'image principale (50) étant découpée en plusieurs morceaux et les morceaux étant entourés chacun par un cadre, chaque image secondaire (52) comportant alors un morceau correspondant de l'image principale (50), entouré dudit cadre,

le ou les codes matriciels (12) correspondants étant affichés sous la forme des images secondaires (52) lors de l'étape d'affichage (170 ; 290), et les images secondaires (52) étant affichées de manière successive à l'écran (14A, 14B),

la résolution de l'écran (14A, 14B) et le code matriciel (12) présentant chacun une dimension selon une direction horizontale (X), et le nombre Nx d'images secondaires (52) selon la direction horizontale (X) vérifiant l'équation suivante :

$$Nx = \begin{cases} E\left(\dfrac{L1x}{L2x - 2 \times ep}\right), & si \ \dfrac{L1x}{L2x - 2 \times ep} - E\left(\dfrac{L1x}{L2x - 2 \times ep}\right) = 0 \\[4mm] E\left(\dfrac{L1x}{L2x - 2 \times ep}\right) + 1, & si \ \dfrac{L1x}{L2x - 2 \times ep} - E\left(\dfrac{L1x}{L2x - 2 \times ep}\right) > 0 \end{cases}$$

où L1x représente la dimension du code matriciel (12) selon la direction horizontale (X) et L2x représente la dimension de la résolution de l'écran (14A, 14B) selon la direction horizontale (X),

ep représente en outre l'épaisseur du cadre, et

E désigne la partie entière,

la résolution de l'écran (14A, 14B) et le code matriciel (12) présentant chacun une dimension selon une direction verticale (Y), et le nombre Ny d'images secondaires (52) selon la direction verticale (Y) vérifie l'équation suivante :

$$Ny = \begin{cases} E\left(\dfrac{L1y}{L2y - 2 \times ep}\right), & si \ \dfrac{L1y}{L2y - 2 \times ep} - E\left(\dfrac{L1y}{L2y - 2 \times ep}\right) = 0 \\[4mm] E\left(\dfrac{L1y}{L2y - 2 \times ep}\right) + 1, & si \ \dfrac{L1y}{L2y - 2 \times ep} - E\left(\dfrac{L1y}{L2y - 2 \times ep}\right) > 0 \end{cases}$$

où L1y représente la dimension du code matriciel (12) selon la direction verticale (Y) et L2y représente la dimension de la résolution de l'écran (14A, 14B) selon la direction verticale (Y),
ep représente en outre l'épaisseur du cadre, et
E désigne la partie entière,

le nombre N d'images secondaires (52) pour chaque code matriciel (12) vérifiant l'équation suivante :

$$N = Nx \times Ny.$$

9. Procédé selon la revendication 8, dans lequel chaque cadre est en forme d'un ensemble de lignes contenant une information encodée.

10. Système (10) d'affichage d'au moins un code matriciel (12) sur un écran (14A, 14B) pour la transmission de données à un équipement électronique (22) muni de moyens (54) de lecture du ou des codes matriciels (12), le système (10) comprenant :

   - au moins un dispositif électronique d'affichage (16A, 16B) comportant l'écran (14A, 14B) et des moyens (42) d'affichage d'informations à l'écran (14A, 14B),
   - des moyens (46) de génération d'au moins un code matriciel en deux dimensions (12) à partir des données à transmettre, et

les moyens d'affichage (42) étant propres à afficher le ou les codes matriciels (12) à l'écran (14A, 14B), les codes matriciels (12) étant affichés de manière successive lorsque plusieurs codes matriciels (12) sont générés,
**caractérisé en ce qu'**il comprend en outre des moyens (48) de découpage d'une image principale (50) correspondant à un code matriciel généré (12) en au moins deux images secondaires (52), les dimensions de l'image principale (50) étant égales aux dimensions dudit code matriciel (12) et les dimensions de chaque image secondaire (52) étant inférieures ou égales à la résolution de l'écran (14A, 14B) du dispositif d'affichage correspondant, l'image principale (50) étant découpée en plusieurs morceaux et les morceaux étant entourés chacun par un cadre, chaque image secondaire (52) comportant alors un morceau correspondant de l'image principale (50), entouré dudit cadre,
le ou les codes matriciels correspondants (12) étant affichés sous la forme des images secondaires (52) par les moyens d'affichage (42), et les images secondaires (52) étant affichées de manière successive à l'écran (14A, 14B) correspondant,
la résolution de l'écran (14A, 14B) et le code matriciel (12) présentant chacun une dimension selon une direction horizontale (X), et le nombre Nx d'images secondaires (52) selon la direction horizontale (X) vérifiant l'équation suivante :

$$Nx = \begin{cases} E\left(\dfrac{L1x}{L2x - 2 \times ep}\right), & si \ \dfrac{L1x}{L2x - 2 \times ep} - E\left(\dfrac{L1x}{L2x - 2 \times ep}\right) = 0 \\[4mm] E\left(\dfrac{L1x}{L2x - 2 \times ep}\right) + 1, & si \ \dfrac{L1x}{L2x - 2 \times ep} - E\left(\dfrac{L1x}{L2x - 2 \times ep}\right) > 0 \end{cases}$$

où L1x représente la dimension du code matriciel (12) selon la direction horizontale (X) et L2x représente la dimension de la résolution de l'écran (14A, 14B) selon la direction horizontale (X),
ep représente en outre l'épaisseur du cadre, et
E désigne la partie entière,

la résolution de l'écran (14A, 14B) et le code matriciel (12) présentant chacun une dimension selon une direction verticale (Y), et le nombre Ny d'images secondaires (52) selon la direction verticale (Y) vérifie l'équation suivante :

$$Ny = \begin{cases} E\left(\dfrac{L1y}{L2y - 2\times ep}\right), & si \ \dfrac{L1y}{L2y - 2\times ep} - E\left(\dfrac{L1y}{L2y - 2\times ep}\right) = 0 \\[3em] E\left(\dfrac{L1y}{L2y - 2\times ep}\right) + 1, & si \ \dfrac{L1y}{L2y - 2\times ep} - E\left(\dfrac{L1y}{L2y - 2\times ep}\right) > 0 \end{cases}$$

où L1y représente la dimension du code matriciel (12) selon la direction verticale (Y) et L2y représente la dimension de la résolution de l'écran (14A, 14B) selon la direction verticale (Y),
ep représente en outre l'épaisseur du cadre, et
E désigne la partie entière,

le nombre N d'images secondaires (52) pour chaque code matriciel (12) vérifiant l'équation suivante :

$$N = Nx \times Ny \, .$$

## Patentansprüche

1. Verfahren zum Anzeigen mindestens eines Matrixcodes (12) auf einem Bildschirm (14A, 14B) einer elektronischen Anzeigevorrichtung (16A, 16B) zur Übermittlung von Daten an eine elektronische Einrichtung (22), welche mit Mitteln (54) zum Lesen des oder der Matrixcodes (12) versehen ist, wobei die elektronische Anzeigevorrichtung (16A, 16B) den Bildschirm (14A, 14B) und Mittel (42) zum Anzeigen von Informationen auf dem Bildschirm aufweist,
wobei das Verfahren die folgenden Schritte aufweist:

   - das Erzeugen (140; 240) mindestens eines Matrixcodes mit zwei Dimensionen (12) aus den zu übermittelnden Daten, und
   - das Anzeigen (170; 290) des oder der Matrixcodes auf dem Bildschirm (14A, 14B), wobei die Matrixcodes (12) auf aufeinanderfolgende Weise angezeigt werden, wenn mehrere Matrixcodes (12) erzeugt werden,

   wobei das Verfahren **dadurch gekennzeichnet ist, dass** es ferner die folgenden Schritte aufweist:

   - das Aufteilen (160; 260) eines Hauptbilds (50), welches mit einem erzeugten Matrixcode (12) korrespondiert, in mindestens zwei Sekundärbilder (52), wobei die Dimensionen des Hauptbilds (50) gleich den Dimensionen des Matrixcodes (12) sind und die Dimensionen jedes Sekundärbilds (52) kleiner oder gleich der Auflösung des Bildschirms (14A, 14B) der Anzeigevorrichtung sind,

   wobei der oder die korrespondierenden Matrixcodes (12) in Gestalt der Sekundärbilder (52) bei dem Schritt des Anzeigens (170; 290) angezeigt werden, und wobei die Sekundärbilder (52) in aufeinanderfolgender Weise auf dem Bildschirm (14A, 14B) angezeigt werden,
   wobei die Auflösung des Bildschirms (14A, 14B) und der Matrixcode (12) jeweils eine Dimension in einer Horizontalrichtung (X) aufweisen, und wobei die Anzahl Nx der Sekundärbilder (52) in der Horizontalrichtung (X) die folgende Gleichung erfüllt:

$$Nx = \begin{cases} E\left(\dfrac{L1x}{L2x}\right), & \text{falls} \ \dfrac{L1x}{L2x} - E\left(\dfrac{L1x}{L2x}\right) = 0 \\[3em] E\left(\dfrac{L1x}{L2x}\right) + 1, & \text{falls} \ \dfrac{L1x}{L2x} - E\left(\dfrac{L1x}{L2x}\right) > 0 \end{cases}$$

worin L1x die Dimension des Matrixcodes (12) in der Horizontalrichtung (X) repräsentiert und L2x die Dimension der Auflösung des Bildschirms (14A, 14B) in der Horizontalrichtung (X) repräsentiert, und
E den ganzzahligen Teil angibt,

wobei die Auflösung des Bildschirms (14A, 14B) und der Matrixcode (12) jeweils eine Dimension in einer Vertikalrichtung (Y) aufweisen, und wobei die Anzahl Ny der Sekundärbilder (52) in der Vertikalrichtung (Y) die folgende Gleichung erfüllt:

$$Ny = \begin{cases} E\left(\dfrac{L1y}{L2y}\right), \text{ falls } \dfrac{L1y}{L2y} - E\left(\dfrac{L1y}{L2y}\right) = 0 \\ E\left(\dfrac{L1y}{L2y}\right) + 1, \text{ falls } \dfrac{L1y}{L2y} - E\left(\dfrac{L1y}{L2y}\right) > 0 \end{cases}$$

worin L1y die Dimension des Matrixcodes (12) in der Vertikalrichtung (Y) repräsentiert und L2y die Dimension der Auflösung des Bildschirms (14A, 14B) in der Vertikalrichtung (Y) repräsentiert, und
E den ganzzahligen Teil angibt,

wobei die Zahl N von Sekundärbildern (52) für jeden Matrixcode (12) die folgende Gleichung erfüllt.

$$N = Nx \times Ny.$$

2. Verfahren gemäß dem Anspruch 1, wobei die Zahl (N) von Sekundärbildern (52) für jeden Matrixcode (12) abhängig ist von der Auflösung (L2x, L2y) des Bildschirms (14A, 14B) der Anzeigevorrichtung und von den Dimensionen (L1x, L1y) des Matrixcodes (12).

3. Verfahren gemäß dem Anspruch 1 oder 2, wobei der oder jeder Matrixcode 812) mit der Norm ISO/IEC 18004 konform ist.

4. Verfahren gemäß irgendeinem der vorhergehenden Ansprüche, wobei die zu übermittelnden Daten von einer fernen elektronischen Vorrichtung (18), welche verschieden von der Anzeigevorrichtung (16A, 16B) ist und mit der Anzeigevorrichtung (16A, 16B) durch eine Datenverbindung verbunden ist, aus empfangen werden.

5. Verfahren gemäß Anspruch 4, wobei die ferne elektronische Vorrichtung (18) aufweist Mittel (46) zum Erzeugen mindestens eines Matrixcodes mit zwei Dimensionen (12) aus den zu übermittelnden Daten und Mittel zum Aufteilen (48) eines Hauptbilds (50), welches mit einem erzeugten Matrixcode (12) korrespondiert, in mindestens zwei Sekundärbilder (52), und wobei die Schritte des Erzeugens (140; 240) und des Aufteilens (260) jeweils zugeordnet durch die Mittel zum Erzeugen (46) und durch die Mittel zum Aufteilen (48) umgesetzt werden.

6. System (10) zum Anzeigen mindestens eines Matrixcodes (12) auf einem Bildschirm (14A, 14B) zur Übermittlung von Daten an eine elektronische Einrichtung (22), welche mit Mitteln (54) zum Lesen des oder der Matrixcodes (12) versehen ist, wobei das System (10) aufweist:

   - mindestens eine elektronische Anzeigevorrichtung (16A, 16B), welche den Bildschirm (14A, 14B) und Mittel (42) zum Anzeigen von Informationen auf dem Bildschirm (14A, 14B) aufweist,
   - Mittel (46) zum Erzeugen mindestens eines Matrixcodes mit zwei Dimensionen (12) aus den zu übermittelnden Daten, und

   wobei die Mittel zum Anzeigen (42) dazu geeignet sind, den oder die Matrixcodes auf dem Bildschirm (14A, 14B) anzuzeigen, wobei die Matrixcodes (12) auf aufeinanderfolgende Weise angezeigt werden, wenn mehrere Matrixcodes (12) erzeugt werden,
   **gekennzeichnet dadurch, dass** es ferner aufweist Mittel (48) zum Aufteilen eines Hauptbilds (50), welches mit einem erzeugten Matrixcode (12) korrespondiert, in mindestens zwei Sekundärbilder (52), wobei die Dimensionen des Hauptbilds (50) gleich den Dimensionen des Matrixcodes (12) sind und die Dimensionen jedes Sekundärbilds (52) kleiner oder gleich der Auflösung des Bildschirms (14A, 14B) der korrespondierenden Anzeigevorrichtung sind, wobei der oder die korrespondierenden Matrixcodes (12) in Gestalt der Sekundärbilder (52) mittels der Mittel zum Anzeigen (42) angezeigt werden, und wobei die Sekundärbilder (52) in aufeinanderfolgender Weise auf dem korrespondierenden Bildschirm (14A, 14B) angezeigt werden,

wobei die Auflösung des Bildschirms (14A, 14B) und der Matrixcode (12) jeweils eine Dimension in einer Horizontalrichtung (X) aufweisen, und wobei die Anzahl Nx der Sekundärbilder (52) in der Horizontalrichtung (X) die folgende Gleichung erfüllt:

$$Nx = \begin{cases} E\left(\dfrac{L1x}{L2x}\right), & \text{falls } \dfrac{L1x}{L2x} - E\left(\dfrac{L1x}{L2x}\right) = 0 \\[4mm] E\left(\dfrac{L1x}{L2x}\right) + 1, & \text{falls } \dfrac{L1x}{L2x} - E\left(\dfrac{L1x}{L2x}\right) > 0 \end{cases}$$

worin L1x die Dimension des Matrixcodes (12) in der Horizontalrichtung (X) repräsentiert und L2x die Dimension der Auflösung des Bildschirms (14A, 14B) in der Horizontalrichtung (X) repräsentiert, und
E den ganzzahligen Teil angibt,

wobei die Auflösung des Bildschirms (14A, 14B) und der Matrixcode (12) jeweils eine Dimension in einer Vertikalrichtung (Y) aufweisen, und wobei die Anzahl Ny der Sekundärbilder (52) in der Vertikalrichtung (Y) die folgende Gleichung erfüllt:

$$Ny = \begin{cases} E\left(\dfrac{L1y}{L2y}\right), & \text{falls } \dfrac{L1y}{L2y} - E\left(\dfrac{L1y}{L2y}\right) = 0 \\[4mm] E\left(\dfrac{L1y}{L2y}\right) + 1, & \text{falls } \dfrac{L1y}{L2y} - E\left(\dfrac{L1y}{L2y}\right) > 0 \end{cases}$$

worin L1y die Dimension des Matrixcodes (12) in der Vertikalrichtung (Y) repräsentiert und L2y die Dimension der Auflösung des Bildschirms (14A, 14B) in der Vertikalrichtung (Y) repräsentiert, und
E den ganzzahligen Teil angibt,

wobei die Zahl N von Sekundärbildern (52) für jeden Matrixcode (12) die folgende Gleichung erfüllt.

$$N = Nx \times Ny.$$

7. System (10) gemäß dem Anspruch 6, wobei das System (10) eine ferne elektronische Vorrichtung (18) aufweist, welche verschieden von der Anzeigevorrichtung (16A, 16B) ist und mit der oder jeder Anzeigevorrichtung (16A, 16B) durch eine Datenverbindung (20) verbunden ist, aus empfangen werden, wobei die ferne elektronische Vorrichtung (18) einen Speicher (34) zum Speichern von zu übermittelnden Daten aufweist, wobei die zu übermittelnden Daten vom Speicher zum Speichern (34) ausgehend durch die Mittel zum Erzeugen (46) empfangen werden.

8. Verfahren zum Anzeigen mindestens eines Matrixcodes (12) auf einem Bildschirm (14A, 14B) einer elektronischen Anzeigevorrichtung (16A, 16B) zur Übermittlung von Daten an eine elektronische Einrichtung (22), welche mit Mitteln (54) zum Lesen des oder der Matrixcodes (12) versehen ist, wobei die elektronische Anzeigevorrichtung (16A, 16B) den Bildschirm (14A, 14B) und Mittel (42) zum Anzeigen von Informationen auf dem Bildschirm aufweist, wobei das Verfahren die folgenden Schritte aufweist:

- das Erzeugen (140; 240) mindestens eines Matrixcodes mit zwei Dimensionen (12) aus den zu übermittelnden Daten, und
- das Anzeigen (170; 290) des oder der Matrixcodes auf dem Bildschirm (14A, 14B), wobei die Matrixcodes (12) auf aufeinanderfolgende Weise angezeigt werden, wenn mehrere Matrixcodes (12) erzeugt werden,

wobei das Verfahren **dadurch gekennzeichnet ist, dass** es ferner die folgenden Schritte aufweist:

- das Aufteilen (160; 260) eines Hauptbilds (50), welches mit einem erzeugten Matrixcode (12) korrespondiert, in mindestens zwei Sekundärbilder (52), wobei die Dimensionen des Hauptbilds (50) gleich den Dimensionen des Matrixcodes (12) sind und die Dimensionen jedes Sekundärbilds (52) kleiner oder gleich der Auflösung des Bildschirms (14A, 14B) der Anzeigevorrichtung sind, wobei das Hauptbild (50) in mehrere Stücke aufgeteilt wird und die Stücke jeweils durch einen Rahmen umgeben werden, wobei jedes Sekundärbild (52) dann ein entsprechendes Stück des Hauptbild (50) aufweist, welches durch den Rahmen umgeben ist,

wobei der oder die korrespondierenden Matrixcodes (12) in Gestalt der Sekundärbilder (52) bei dem Schritt des Anzeigens (170; 290) angezeigt werden, und wobei die Sekundärbilder (52) in aufeinanderfolgender Weise auf dem Bildschirm (14A, 14B) angezeigt werden,
wobei die Auflösung des Bildschirms (14A, 14B) und der Matrixcode (12) jeweils eine Dimension in einer Horizontalrichtung (X) aufweisen, und wobei die Anzahl Nx der Sekundärbilder (52) in der Horizontalrichtung (X) die folgende Gleichung erfüllt:

$$Nx = \begin{cases} E\left(\dfrac{L1x}{L2x - 2\times ep}\right), & \text{falls } \dfrac{L1x}{L2x - 2\times ep} - E\left(\dfrac{L1x}{L2x - 2\times ep}\right) = 0 \\[2em] E\left(\dfrac{L1x}{L2x - 2\times ep}\right) + 1, & \text{falls } \dfrac{L1x}{L2x - 2\times ep} - E\left(\dfrac{L1x}{L2x - 2\times ep}\right) > 0 \end{cases}$$

worin L1x die Dimension des Matrixcodes (12) in der Horizontalrichtung (X) repräsentiert und L2x die Dimension der Auflösung des Bildschirms (14A, 14B) in der Horizontalrichtung (X) repräsentiert,
ep ferner die Dicke des Rahmens repräsentiert, und
E den ganzzahligen Teil angibt,

wobei die Auflösung des Bildschirms (14A, 14B) und der Matrixcode (12) jeweils eine Dimension in einer Vertikalrichtung (Y) aufweisen, und wobei die Anzahl Ny der Sekundärbilder (52) in der Vertikalrichtung (Y) die folgende Gleichung erfüllt:

$$Ny = \begin{cases} E\left(\dfrac{L1y}{L2y - 2\times ep}\right), & \text{falls } \dfrac{L1y}{L2y - 2\times ep} - E\left(\dfrac{L1y}{L2y - 2\times ep}\right) = 0 \\[2em] E\left(\dfrac{L1y}{L2y - 2\times ep}\right) + 1, & \text{falls } \dfrac{L1y}{L2y - 2\times ep} - E\left(\dfrac{L1y}{L2y - 2\times ep}\right) > 0 \end{cases}$$

worin L1y die Dimension des Matrixcodes (12) in der Vertikalrichtung (Y) repräsentiert und L2y die Dimension der Auflösung des Bildschirms (14A, 14B) in der Vertikalrichtung (Y) repräsentiert,
ep ferner die Dicke des Rahmens repräsentiert, und
E den ganzzahligen Teil angibt,

wobei die Zahl N von Sekundärbildern (52) für jeden Matrixcode (12) die folgende Gleichung erfüllt.

$$N = Nx \times Ny.$$

9. Verfahren nach Anspruch 8, wobei jeder Rahmen in Gestalt einer Gruppe von Linien, die eine codierte Information enthalten, ausgebildet ist.

10. System (10) zum Anzeigen mindestens eines Matrixcodes (12) auf einem Bildschirm (14A, 14B) zur Übermittlung von Daten an eine elektronische Einrichtung (22), welche mit Mitteln (54) zum Lesen des oder der Matrixcodes (12) versehen ist, wobei das System (10) aufweist:

   - mindestens eine elektronische Anzeigevorrichtung (16A, 16B), welche den Bildschirm (14A, 14B) und Mittel (42) zum Anzeigen von Informationen auf dem Bildschirm (14A, 14B) aufweist,
   - Mittel (46) zum Erzeugen mindestens eines Matrixcodes mit zwei Dimensionen (12) aus den zu übermittelnden Daten, und

   wobei die Mittel zum Anzeigen (42) dazu geeignet sind, den oder die Matrixcodes auf dem Bildschirm (14A, 14B) anzuzeigen, wobei die Matrixcodes (12) auf aufeinanderfolgende Weise angezeigt werden, wenn mehrere Matrixcodes (12) erzeugt werden,
   **gekennzeichnet dadurch, dass** es ferner aufweist Mittel (48) zum Aufteilen eines Hauptbilds (50), welches mit einem erzeugten Matrixcode (12) korrespondiert, in mindestens zwei Sekundärbilder (52), wobei die Dimensionen des Hauptbilds (50) gleich den Dimensionen des Matrixcodes (12) sind und die Dimensionen jedes Sekundärbilds (52) kleiner oder gleich der Auflösung des Bildschirms (14A, 14B) der korrespondierenden Anzeigevorrichtung sind, wobei das Hauptbild (50) in mehrere Stücke aufgeteilt ist und die Stücke jeweils durch einen Rahmen umgeben sind, wobei jedes Sekundärbild (52) dann ein entsprechendes Stück des Hauptbild (50) aufweist, welches durch den Rahmen umgeben ist,
   wobei der oder die korrespondierenden Matrixcodes (12) in Gestalt der Sekundärbilder (52) bei dem Schritt des Anzeigens (170; 290) angezeigt werden, und wobei die Sekundärbilder (52) in aufeinanderfolgender Weise auf dem Bildschirm (14A, 14B) angezeigt werden,
   wobei die Auflösung des Bildschirms (14A, 14B) und der Matrixcode (12) jeweils eine Dimension in einer Horizontalrichtung (X) aufweisen, und wobei die Anzahl Nx der Sekundärbilder (52) in der Horizontalrichtung (X) die folgende Gleichung erfüllt:

$$Nx = \begin{cases} E\left(\dfrac{L1x}{L2x - 2 \times ep}\right), \text{ falls } \dfrac{L1x}{L2x - 2 \times ep} - E\left(\dfrac{L1x}{L2x - 2 \times ep}\right) = 0 \\[3mm] E\left(\dfrac{L1x}{L2x - 2 \times ep}\right) + 1, \text{ falls } \dfrac{L1x}{L2x - 2 \times ep} - E\left(\dfrac{L1x}{L2x - 2 \times ep}\right) > 0 \end{cases}$$

   worin L1x die Dimension des Matrixcodes (12) in der Horizontalrichtung (X) repräsentiert und L2x die Dimension der Auflösung des Bildschirms (14A, 14B) in der Horizontalrichtung (X) repräsentiert,
   ep ferner die Dicke des Rahmens repräsentiert, und
   E den ganzzahligen Teil angibt,

   wobei die Auflösung des Bildschirms (14A, 14B) und der Matrixcode (12) jeweils eine Dimension in einer Vertikalrichtung (Y) aufweisen, und wobei die Anzahl Ny der Sekundärbilder (52) in der Vertikalrichtung (Y) die folgende Gleichung erfüllt:

$$Ny = \begin{cases} E\left(\dfrac{L1y}{L2y - 2 \times ep}\right), & \text{falls } \dfrac{L1y}{L2y - 2 \times ep} - E\left(\dfrac{L1y}{L2y - 2 \times ep}\right) = 0 \\[2em] E\left(\dfrac{L1y}{L2y - 2 \times ep}\right) + 1, & \text{falls } \dfrac{L1y}{L2y - 2 \times ep} - E\left(\dfrac{L1y}{L2y - 2 \times ep}\right) > 0 \end{cases}$$

worin L1y die Dimension des Matrixcodes (12) in der Vertikalrichtung (Y) repräsentiert und L2y die Dimension der Auflösung des Bildschirms (14A, 14B) in der Vertikalrichtung (Y) repräsentiert,
ep ferner die Dicke des Rahmens repräsentiert, und
E den ganzzahligen Teil angibt,

wobei die Zahl N von Sekundärbildern (52) für jeden Matrixcode (12) die folgende Gleichung erfüllt.

$$N = Nx \times Ny.$$

**Claims**

1. A method for displaying at least one matrix code (12) on a screen (14A, 14B) of an electronic display device (16A, 16B), for sending data to electronic equipment (22) provided with means (54) for reading the matrix code(s) (12), the display device (16A, 16B) comprising the screen (14A, 14B) and means (42) for displaying information on the screen,
the method comprising the following steps:

   - the generation (140; 240) of at least one two-dimensional matrix code (12) from the data to be sent, and
   - the display (170; 290) of the matrix code(s) on the screen (14A, 14B), the matrix codes (12) being displayed successively when a plurality of matrix codes (12) are generated,

   the method being **characterized in that** it furthermore includes the following step:

   - the partitioning (160; 260) of a primary image (50) corresponding to a generated matrix code (12) into at least two secondary images (52), the dimensions of the primary image (50) being equal to the dimensions of said matrix code (12) and the dimensions of each secondary image (52) being less than or equal to the resolution of the screen (14A, 14B) of the display device,

   the corresponding matrix code(s) (12) being displayed in the form of the secondary images (52) during the display step (170; 290) and the secondary images (52) being displayed successively on the screen (14A, 14B),
   the resolution of the screen (14A, 14B) and the matrix code (12) each having a dimension in a horizontal direction (X) and the number Nx of secondary images (52) in the horizontal direction (X) verifying the following equation:

$$Nx = \begin{cases} E\left(\dfrac{L1x}{L2x}\right), & si \ \dfrac{L1x}{L2x} - E\left(\dfrac{L1x}{L2x}\right) = 0 \\[2em] E\left(\dfrac{L1x}{L2x}\right) + 1, & si \ \dfrac{L1x}{L2x} - E\left(\dfrac{L1x}{L2x}\right) > 0 \end{cases}$$

   where L1x represents the dimension of the matrix code (12) in the horizontal direction (X) and L2x represents the dimension of the resolution of the screen (14A, 14B) in the horizontal direction (X), and
   E denotes the integer part,

the resolution of the screen (14A, 14B) and the matrix code (12) each having a dimension in a vertical direction (Y) and the number Ny of secondary images (52) in the vertical direction (Y) verifying the following equation:

$$Ny = \begin{cases} E\left(\dfrac{L1y}{L2y}\right), & si \;\; \dfrac{L1y}{L2y} - E\left(\dfrac{L1y}{L2y}\right) = 0 \\[3ex] E\left(\dfrac{L1y}{L2y}\right) + 1, & si \;\; \dfrac{L1y}{L2y} - E\left(\dfrac{L1y}{L2y}\right) > 0 \end{cases}$$

where L1y represents the dimension of the matrix code (12) in the vertical direction (Y) and L2y represents the dimension of the resolution of the screen (14A, 14B) in the vertical direction (Y), and
E denotes the integer part,

the number N of secondary images (52) for each matrix code (12) verifying the following equation:

$$N = Nx \times Ny \;.$$

2. The method according to claim 1, wherein the number (N) of secondary images (52) for each matrix code (12) is a function of the resolution (L2x, L2y) of the screen (14A, 14B) of the display device and the dimensions (L1x, L1y) of said matrix code (12).

3. The method according to claim 1 or 2, wherein the or each matrix code (12) complies with the ISO/IEC 18004 standard.

4. The method according to any one of the preceding claims, wherein the data to be sent are received from a remote electronic device (18), different from the display device (16A, 16B) and connected to the display device (16A, 16B) via a data link (20).

5. The method according to claim 4, wherein the remote electronic device (18) comprises means (46) for generating at least one two-dimensional matrix code (12) from the data to be sent and means (48) for partitioning a primary image (50) corresponding to a generated matrix code (12) into at least two secondary images (52), and wherein the steps of generation (240) and partitioning (260) are carried out by said generation means (46) and by said partitioning means (48) respectively.

6. A system (10) for displaying at least one matrix code (12) on a screen (14A, 14B) to send data to electronic equipment (22) provided with means (54) for reading the matrix code(s) (12), the system (10) comprising:

   - at least one electronic display device (16A, 16B) comprising the screen (14A, 14B) and means (42) for displaying information on the screen (14A, 14B),
   - means (46) for generating at least one two-dimensional matrix code (12) from the data to be sent, and

   the display means (42) being suitable for displaying the matrix code(s) (12) on the screen (14A, 14B), the matrix codes (12) being displayed successively when a plurality of matrix codes (12) are generated,
   **characterized in that** it furthermore includes means (48) for partitioning a primary image (50) corresponding to a generated matrix code (12) into at least two secondary images (52), the dimensions of the primary image (50) being equal to the dimensions of said matrix code (12) and the dimensions of each secondary image (52) being less than or equal to the resolution of the screen (14A, 14B) of the corresponding display device,
   the corresponding matrix code(s) (12) being displayed in the form of the secondary images (52) by the display means (42) and the secondary images (52) being displayed successively on the corresponding screen (14A, 14B), the resolution of the screen (14A, 14B) and the matrix code (12) each having a dimension in a horizontal direction (X) and the number Nx of secondary images (52) in the horizontal direction (X) verifying the following equation:

$$Nx = \begin{cases} E\left(\dfrac{L1x}{L2x}\right), & si \ \dfrac{L1x}{L2x} - E\left(\dfrac{L1x}{L2x}\right) = 0 \\[4mm] E\left(\dfrac{L1x}{L2x}\right) + 1, & si \ \dfrac{L1x}{L2x} - E\left(\dfrac{L1x}{L2x}\right) > 0 \end{cases}$$

where L1x represents the dimension of the matrix code (12) in the horizontal direction (X) and L2x represents the dimension of the resolution of the screen (14A, 14B) in the horizontal direction (X), and E denotes the integer part,

the resolution of the screen (14A, 14B) and the matrix code (12) each having a dimension in a vertical direction (Y) and the number Ny of secondary images (52) in the vertical direction (Y) verifying the following equation:

$$Ny = \begin{cases} E\left(\dfrac{L1y}{L2y}\right), & si \ \dfrac{L1y}{L2y} - E\left(\dfrac{L1y}{L2y}\right) = 0 \\[4mm] E\left(\dfrac{L1y}{L2y}\right) + 1, & si \ \dfrac{L1y}{L2y} - E\left(\dfrac{L1y}{L2y}\right) > 0 \end{cases}$$

where L1y represents the dimension of the matrix code (12) in the vertical direction (Y) and L2y represents the dimension of the resolution of the screen (14A, 14B) in the vertical direction (Y), and E denotes the integer part,

the number N of secondary images (52) for each matrix code (12) verifying the following equation:

$$N = Nx \times Ny \ .$$

7. The system (10) according to claim 6, wherein the system (10) further comprises a remote electronic device (18), distinct from the display device (16A, 16B) and connected to the or to each display device (16A, 16B) via a data link (20), the electronic device (18) comprising a memory (34) for storing the data to be sent, the data to be sent being received by the generation means (46) from the storage memory (34).

8. A method for displaying at least one matrix code (12) on a screen (14A, 14B) of an electronic display device (16A, 16B), for sending data to electronic equipment (22) provided with means (54) for reading the matrix code(s) (12), the display device (16A, 16B) comprising the screen (14A, 14B) and means (42) for displaying information on the screen,
the method comprising the following steps:

   - the generation (140; 240) of at least one two-dimensional matrix code (12) from the data to be sent, and
   - the display (170; 290) of the matrix code(s) on the screen (14A, 14B), the matrix codes (12) being displayed successively when a plurality of matrix codes (12) are generated,

the method being **characterized in that** it furthermore includes the following step:

   - the partitioning (160; 260) of a primary image (50) corresponding to a generated matrix code (12) into at least two secondary images (52), the dimensions of the primary image (50) being equal to the dimensions of said matrix code (12) and the dimensions of each secondary image (52) being less than or equal to the resolution of the screen (14A, 14B) of the display device, the primary image (50) being partitioned into a plurality of pieces and the pieces being each surrounded by a frame, each secondary image (52) then comprising a corresponding piece of the primary image (50), surrounded by said frame,

the corresponding matrix code(s) (12) being displayed in the form of the secondary images (52) during the display step (170; 290) and the secondary images (52) being displayed successively on the screen (14A, 14B),

the resolution of the screen (14A, 14B) and the matrix code (12) each having a dimension in a horizontal direction (X) and the number Nx of secondary images (52) in the horizontal direction (X) verifying the following equation:

$$Nx = \begin{cases} E\left(\dfrac{L1x}{L2x - 2 \times ep}\right), & si \ \dfrac{L1x}{L2x - 2 \times ep} - E\left(\dfrac{L1x}{L2x - 2 \times ep}\right) = 0 \\ E\left(\dfrac{L1x}{L2x - 2 \times ep}\right) + 1, & si \ \dfrac{L1x}{L2x - 2 \times ep} - E\left(\dfrac{L1x}{L2x - 2 \times ep}\right) > 0 \end{cases}$$

where L1x represents the dimension of the matrix code (12) in the horizontal direction (X) and L2x represents the dimension of the resolution of the screen (14A, 14B) in the horizontal direction (X),
ep further represents the thickness of the frame, and
E denotes the integer part,

the resolution of the screen (14A, 14B) and the matrix code (12) each having a dimension in a vertical direction (Y) and the number Ny of secondary images (52) in the vertical direction (Y) verifying the following equation:

$$Ny = \begin{cases} E\left(\dfrac{L1y}{L2y - 2 \times ep}\right), & si \ \dfrac{L1y}{L2y - 2 \times ep} - E\left(\dfrac{L1y}{L2y - 2 \times ep}\right) = 0 \\ E\left(\dfrac{L1y}{L2y - 2 \times ep}\right) + 1, & si \ \dfrac{L1y}{L2y - 2 \times ep} - E\left(\dfrac{L1y}{L2y - 2 \times ep}\right) > 0 \end{cases}$$

where L1y represents the dimension of the matrix code (12) in the vertical direction (Y) and L2y represents the dimension of the resolution of the screen (14A, 14B) in the vertical direction (Y),
ep further represents the thickness of the frame, and
E denotes the integer part,

the number N of secondary images (52) for each matrix code (12) verifying the following equation:

$$N = Nx \times Ny \ .$$

9. The method according to claim 8, wherein each frame is in the form of a group of lines containing encoded information.

10. A system (10) for displaying at least one matrix code (12) on a screen (14A, 14B) to send data to electronic equipment (22) provided with means (54) for reading the matrix code(s) (12), the system (10) comprising:

- at least one electronic display device (16A, 16B) comprising the screen (14A, 14B) and means (42) for displaying information on the screen (14A, 14B),
- means (46) for generating at least one two-dimensional matrix code (12) from the data to be sent, and

the display means (42) being suitable for displaying the matrix code(s) (12) on the screen (14A, 14B), the matrix codes (12) being displayed successively when a plurality of matrix codes (12) are generated,
**characterized in that** it furthermore includes means (48) for partitioning a primary image (50) corresponding to a generated matrix code (12) into at least two secondary images (52), the dimensions of the primary image (50) being equal to the dimensions of said matrix code (12) and the dimensions of each secondary image (52) being less than or equal to the resolution of the screen (14A, 14B) of the corresponding display device, the primary image (50) being partitioned into a plurality of pieces and the pieces being each surrounded by a frame, each secondary image (52) then comprising a corresponding piece of the primary image (50), surrounded by said frame,
the corresponding matrix code(s) (12) being displayed in the form of the secondary images (52) during the display step (170; 290) and the secondary images (52) being displayed successively on the screen (14A, 14B),
the resolution of the screen (14A, 14B) and the matrix code (12) each having a dimension in a horizontal direction (X) and the number Nx of secondary images (52) in the horizontal direction (X) verifying the following equation:

$$Nx = \begin{cases} E\left(\dfrac{L1x}{L2x - 2 \times ep}\right), & si \ \dfrac{L1x}{L2x - 2 \times ep} - E\left(\dfrac{L1x}{L2x - 2 \times ep}\right) = 0 \\[3ex] E\left(\dfrac{L1x}{L2x - 2 \times ep}\right) + 1, & si \ \dfrac{L1x}{L2x - 2 \times ep} - E\left(\dfrac{L1x}{L2x - 2 \times ep}\right) > 0 \end{cases}$$

where L1x represents the dimension of the matrix code (12) in the horizontal direction (X) and L2x represents the dimension of the resolution of the screen (14A, 14B) in the horizontal direction (X),
ep further represents the thickness of the frame, and
E denotes the integer part,

the resolution of the screen (14A, 14B) and the matrix code (12) each having a dimension in a vertical direction (Y) and the number Ny of secondary images (52) in the vertical direction (Y) verifying the following equation:

$$Ny = \begin{cases} E\left(\dfrac{L1y}{L2y - 2 \times ep}\right), & si \ \dfrac{L1y}{L2y - 2 \times ep} - E\left(\dfrac{L1y}{L2y - 2 \times ep}\right) = 0 \\[3ex] E\left(\dfrac{L1y}{L2y - 2 \times ep}\right) + 1, & si \ \dfrac{L1y}{L2y - 2 \times ep} - E\left(\dfrac{L1y}{L2y - 2 \times ep}\right) > 0 \end{cases}$$

where L1y represents the dimension of the matrix code (12) in the vertical direction (Y) and L2y represents the dimension of the resolution of the screen (14A, 14B) in the vertical direction (Y),
ep further represents the thickness of the frame, and
E denotes the integer part,

the number N of secondary images (52) for each matrix code (12) verifying the following equation:

$$N = Nx \times Ny \ .$$

Fig.1

Fig.2

*Fig.3*

*Fig.4*

Fig.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080122847 A1